# EUROPÄISCHE PATENTSCHRIFT

(11) **EP 1 508 192 B1**
(45) Veröffentlichungstag und Bekanntmachung des Hinweises auf die Patenterteilung: **11.05.2016**
(21) Anmeldenummer: 03752737.1
(22) Anmeldetag: 13.05.2003
(51) Int. Cl.: H02H 9/00

(54) **HAUSHALTGERÄT UMFASSEND EINE NETZANSCHLUSSEINHEIT MIT EINEM NETZENTSTÖRFILTER FÜR DAS ELEKTRISCH BETRIEBENE HAUSHALTGERÄT**
DOMESTIC APPLIANCE COMPRISING A SUPPLY CONNECTION UNIT WITH AN INTERFERENCE SUPPRESSION FILTER FOR THE ELECTRIC DOMESTIC APPLIANCE
APPAREIL MENAGER COMPRENANT UNE UNITE DE RACCORDEMENT AU RESEAU AVEC UN FILTRE DE DEPARASITAGE POUR L' APPAREIL MENAGER ELECTRIQUE

(30) Priorität: 17.05.2002 DE 10222108
(43) Veröffentlichungstag der Anmeldung: 23.02.2005
(73) Patentinhaber: BSH Hausgeräte GmbH, 81739 München (DE)
(72) Erfinder: ALBAYRAK, Hasan, Gökcer, 13469 Berlin (DE); DULDHARDT, Bernd, 10969 Berlin (DE); LUDENIA, Thomas, 14612 Falkensee (DE)
(86) Internationale Anmeldenummer: PCT/EP2003/005006
(87) Internationale Veröffentlichungsnummer: WO 2003/098766

(56) Entgegenhaltungen:
- EP-A- 1 107 415
- GB-A- 2 163 303

## Beschreibung

Die Erfindung betrifft ein Haushaltgerät, welche eine Netzanschlusseinheit mit einem Netzentstörfilter, an dessen Ausgangsseite die zentrale Stromversorgungseinrichtung für die elektrische Ausrüstung des Haushaltgerätes und mindestens eines elektronischen Steuergerätes des Haushaltgerätes angeschlossen ist.

Das aus EP 0 593 862 A1 bekannte Anschlussgehäuse für elektrische Geräte ist einerseits jener Art, bei der ein Netzentstörfilter - hier ein einfacher Kondensator-in der Netzanschlusseinheit untergebracht ist. Zwar beschreibt diese Druckschrift nicht die zentrale Stromversorgungseinrichtung für die elektrische Ausrüstung und ein elektronisches Steuergerät. Da diese Einrichtungen aber regelmäßige Bestandteile heutiger elektrischer Geräte sind, ist das bekannte Anschlussgehäuse als Vorbild für die eingangs genannte Netzanschlusseinheit anzusehen.

Aus der GB 2 163 303 A geht eine Netzanschlusseinheit mit einem Netzentstörfilter hervor, an dessen Ausgangsseite ein Sockel zum Anschluss eines elektronischen Gerätes angeschlossen ist, wobei zusammen mit dem Netzentstörfilter eine Netztrennvorrichtung in den Phasenleiter geschaltet ist.

Ferner ist aus EP 1 107 415 A1 eine Netztrennvorrichtung für eine Spannungsversorgungsschaltung bekannt. Die Netztrennvorrichtung umfasst eine Kontrollschaltung, welche eine unausgewogene Netzspannungsversorgung detektieren und eine Abschaltvorrichtung der Netztrennvorrichtung aktivieren kann.

Der Erfindung liegt die Aufgabe zugrunde, in elektrischen Geräten immer wiederkehrende, standardisierte Einrichtungen weiter so zu integrieren, dass Funktions-Baugruppen von Funktionen freigehalten werden, die nicht zu ihrem Aufgabenfeld gehören. Damit sollen immer wiederkehrende Funktionen im Bereich der elektrischen Versorgung von Baugruppen standardisiert und für die unterschiedlichsten Typen von Hausgeräten in großer Zahl von Gleichteilen preiswerter als bisher vorgehalten werden.

Erfindungsgemäß wird diese Aufgabe dadurch gelöst, dass ein Haushaltgerät mit einer Netzanschlusseinheit bereitgestellt wird, wobei zusammen mit dem Netzentstörfilter in die oder den Phasenleiter oder zusätzlich in den Nullleiter eine automatisch steuerbare Netztrennvorrichtung geschaltet ist, an deren Netzeingangsseite die Stromversorgungseinrichtung für eine elektronische Steuerlogik der Netztrennvorrichtung und an deren Steuereingang der Steuerausgang der Steuerlogik angeschlossen sind.

Das Haushaltgerät mit der erfindungsgemäßen Netzanschlusseinheit hat gegenüber dem Stand der Technik den Vorteil, dass die jeweiligen Komponenten, die bisher zusammen mit den vorgenannten Funktionsteilen (Steuerlogik, Stromversorgungseinrichtungen) vereint waren und dadurch unter Umständen mehrfach im Haushaltgerät, nämlich in unterschiedlichen Komponenten, vorhanden waren, so sehr von universell verwendbaren Funktionsteilen entlastet werden können, dass sie einerseits besser auf ihre spezifischen Anforderungen ausgerichtet und andererseits wegen dieser Entlastung natürlich billiger sind. Auf den jeweiligen Boards der Komponenten wird dann außerdem noch Fläche für andere Beschaltungen frei.

Zwar sind diese Funktionsteile dennoch erforderlich. Da sie nun aber an zentraler Stelle, nämlich in der Netzanschlusseinheit, untergebracht sind, muss nicht jede Komponente ihr eigenes Funktionsteil haben (also sind insgesamt weniger Funktionsteile in einem Haushaltgerät untergebracht) und durch die für alle oder wenigstens mehrere Typen von Haushaltgeräten gleichen Funktionsteile kann sich deren Zahl vermehren und zu einem Rationalisierungseffekt beitragen.

Da die Netztrennfunktion grundsätzlich in der Netzanschlusseinheit enthalten ist, ergeben sich noch weitere Vorteile: Auf der Bedienungsblende kann der Platz für den Netzschalter eingespart werden. Das Netzentstörfilter liegt nicht mehr ständig an Netzspannung; dadurch können preiswertere Filterkondensatoren eingesetzt werden (Güteklasse X2 statt X1). Als eine die Netzschalterfunktion ausübende Handhabe genügt nun eine Kurzhubtaste, eine Folientaste, ein Touch-Sensor o.ä. gegenüber einer früher erforderlichen rastenden Drucktaste oder einem Kipp- oder Wippschalter. Dadurch ist eine angenehmere Haptik und Optik zu erzielen. Der geringere Platzbedarf einer solchen Handhabe ermöglicht auch eine freiere Wahl von Anordnungsräumen.

Vorteilhafterweise kann die Erfindung dadurch weitergebildet werden, dass die Steuerlogik mindestens einen Eingang für Triggersignale und eine Schaltvorrichtung aufweist, die das Ein- und/oder Ausschalten der Netztrennvorrichtung bewirkt, sobald ein Triggersignal an dem Eingang anliegt. Solche Triggersignale sind von im Haushaltgerät verteilt angeordneten Komponenten zu gewinnen, ohne dass es dazu eines erheblichen Mehraufwandes bedürfte. Die Schaltvorrichtung zum Ein- bzw. Ausschalten der Netztrennvorrichtung ist ohnehin erforderlich und muss nur einmal je Haushaltgerät vorgesehen sein.

Wenn gemäß einer weiteren vorteilhaften Weiterbildung der Erfindung mindestens einer der Eingänge für Triggersignale einem Fehlerzustand zugeordnet ist, der beim Anliegen eines Triggersignals an diesem Eingang eine Notabschaltung der Stromversorgung der elektrischen Ausrüstung zur Folge hat, ist die sicherheitstechnische Aufgabe ohne großen Aufwand erfüllt. Ein solcher Fehlerzustand kann beispielsweise ein Masseschluss in der elektrischen Ausrüstung oder ein Bruch eines Antriebsriemens oder ähnliches sein, ein Zustand also, bei dem irgend ein Bauteil innerhalb des Haushaltgerätes seine ordnungsgemäße Funktion aufgegeben oder eine sicherheitstechnische Eigenschaft verloren hat. Der Fehlerzustand soll dann ein Ausgangssignal der Steuerlogik bewirken, das die Netztrennvorrichtung zur Unterbrechung der Phasenleitungen oder zusätzlich des Nullleiters veranlasst.

Eine Ausgestaltung der Erfindung wäre von besonderm Vorteil, nämlich wenn die Steuerlogik einen Ausgang für ein Signal an einen optischen oder akustischen Signalgeber aufweist, der im Falle einer Notabschaltungsmaßnahme ein positives Signal empfängt. Dann wäre die Bedienungsperson des Haushaltgerätes bestens informiert, sobald ein solcher Fehlerzustand aufgetreten ist.

Anstelle einer solchen unmittelbaren Ansteuerung könnte auch gemäß einer anderen vorteilhaften Fortbildung der Erfindung die Steuerlogik einen Ausgang für ein elektrisches Signal an das elektronische Steuergerät aufweisen, das im Falle einer Notabschaltmaßnahme ein optisches oder akustisches Anzeigesignal erzeugt.

Das Rücksetzen der Steuerlogik sollte gemäß einer weiteren vorteilhaften Ausbildung der Erfindung von einer bestimmten vorgeschalteten Handlung abhängig sein. Eine solche vorgeschaltete Handlung zwingt automatisch zu einer gewissen Aufmerksamkeit, die einem Fehlerzustand, der zu einer Notabschaltung geführt hatte, zuzubilligen ist. Eine solche bestimmte Handlung könnte beispielsweise das aktive Auslösen - beispielsweise an einer Schalteinrichtung der Netzanschlusseinheit - eines Freigabesignals oder das Ziehen des Netzsteckers sein.

In besonders vorteilhafter Weise hat die Stromversorgung für die Steuerlogik mindestens einen Ausgang, der zur stand-by-Stromversorgung an mindestens eine Komponente der elektrischen Ausrüstung des Haushaltgerätes geführt ist. Dadurch ist eine Funktion, die sonst auf dem Board der betreffenden Komponente eine besondere Maßnahme erfordert, auf kostengünstige Weise bereits an der ohnehin vorhandenen Stromversorgung bereits unterzubringen.

Wenn in Versorgungsrichtung hinter der Netztrennvorrichtung eine allgemeine Stromversorgungseinrichtung für mindestens eine Komponente der elektrischen Ausrüstung des Haushaltgerätes an die Netzleitungen angeschlossen ist, kann hier in der Netzanschlusseinheit auch noch die allgemeine Stromversorgung von Komponenten für den Kleinspannungsbereich vorgesehen sein. Auch dies trägt zur Minderung der Kosten bei und vermindert die Störungsanfälligkeit.

Wenn dann noch die allgemeine Stromversorgungseinrichtung einen Ausgang hat, der ein power-down-Signal und/oder ein power-up-Signal an ein elektronisches Steuergerät ausgeben kann, sind weitere Einrichtungen zum Zurücksetzen bzw. Halten des Grundzustandes einer Programmsteuereinrichtung entbehrlich, so dass auch in dieser Hinsicht Kostenreduzierungen möglich sind.

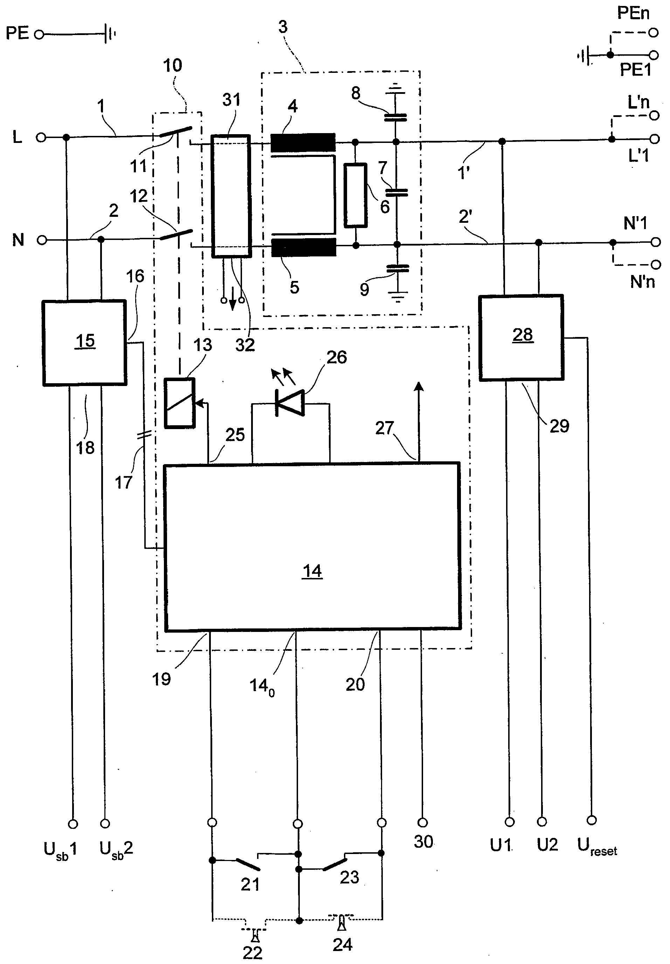

Anhand eines in der Zeichnung dargestellten Ausführungsbeispiels sind die Erfindung zusammen und weitere vorteilhafte Weiterbildungen nachstehend erläutert.

Die Zeichnung zeigt ein elektrisches Schaltbild für eine Netzanschlusseinheit gemäß der Erfindung. Darin sind von den Netzklemmen L und N zwei Leitungen 1 und 2 bzw. 1' und 2' zu den Stromversorgungsklemmen L'1 und N'1 geführt. Zusätzlich sind selbstverständlich die Erdungsklemmen PE (eingangsseitig) und PE1 (versorgungsseitig) vorhanden. Bei einer mehr als 1-phasigen Stromversorgung können selbstverständlich entsprechend mehr Phasen durch geeignete Leitungen fortgeführt werden. Für die Versorgung von weiteren Komponenten können natürlich entsprechend weitere Klemmen vorgesehen sein. Dies ist versorgungsseitig durch die gestrichelt angedeuteten Leitungen und Klemmen L'n, N'n und PEn angedeutet.

Im Zuge der Leitungen 1, 1' und 2, 2' liegt ein Netzentstörfilter 3 bestehend aus zwei magnetisch miteinander gekoppelten Induktivitäten 4 und 5, einem Parallelwiderstand 6 und drei Kapazitäten 7, 8 und 9. Diese Einrichtungen gehören zum normalen Ausrüstungsstand einer elektrischen Versorgungseinrichtung für elektronisch gesteuerte Haushaltgeräte.

Im Zuge der Leitungen 1 und 2 sind gemäß der Erfindung auf der Einspeisungsseite des Netzentstörfilters 3 einer Netztrennvorrichtung 10 je ein Schalter 11 und 12 eingeschaltet. Zur Netztrennvorrichtung gehört aber auch noch das Steuerrelais 13 für die Schalter 11 und 12, das selbst von der Steuerlogik 14 aktiviert oder deaktiviert werden kann.

Auf der Einspeisungsseite ist außerdem eine Stromversorgungseinrichtung 15 an die Leiter 1 und 2 angeschlossen, deren Ausgang 16 über zwei nur angedeutete Leitungen 17 die Steuerlogik 14 mit Spannung versorgt. Der Ausgang 18 der Stromversorgungseinrichtung 15 ist an Klemmen U_{sb}1 und U_{sb}2 geführt, die für Spannungen zur Aufrechterhaltung von stand-by-Zuständen genutzt werden können.

Die Steuerlogik 14 hat mehrere flankengetriggerte und/oder impulsgetriggerte und/oder statische Eingänge 19 und 20 mit positiver oder negativer Charakteristik. Die Eingänge 19 und 20 haben gegenüber dem Anschluss 14₀ eine Potentialdifferenz, die über Schalter 21 oder Tasten 22 zum Einschalten oder Ausschalten der Versorgung der übrigen elektrischen Ausrüstung des Haushaltgerätes oder über mehrere Schalter 23 oder Tasten 24 zur (vorrübergehenden oder absoluten) Abschaltung der elektrischen Versorgung auf einen der Eingänge 19 oder 20 geschaltet wird oder von einem dieser Eingänge abgeschaltet wird. Dadurch würde am Ausgang 25 der Steuerlogik 14 ein positives oder negatives Signal anstehen, das die betriebsmäßige oder die gefährdungsbedingte Ein- oder Ausschaltung an den Schaltern 11 und 12 der Leitungen 1 und 2 vornimmt.

Im Falle einer gefährdungsbedingten Abschaltung der Leitungen 1 und 2 - einer sogenannten Notabschaltung - wird die Bedienungsperson außerdem mittels der optischen Signaleinrichtung 26 über diese Notabschaltung aufgeklärt. Alternativ oder zusätzlich dazu kann eine akustische Anzeige erfolgen. Ebenfalls alternativ oder zusätzlich kann über die Leitung 27 der Steuerlogik 14 ein elektrisches Signal über den Zustand der Notabschaltung einer elektronischen Steuerungseinrichtung (hier nicht dargestellt) zugeführt werden.

Weiterhin ist am Ausgang des Netzentstörfilters 3 (Versorgungsleitungen 1' und 2') eine allgemeine Stromversorgungseinrichtung 28 für mindestens eine Komponente der elektrischen Ausrüstung des Haushaltgerätes angeschlossen. Dies kann eine allgemeine Versorgung der elektrischen Ausrüstung mit Kleinspannungen U1 und U2 sein, die in ihrer Höhe geregelt sind und an ihrem Ausgang 29 liegen. Sie kann außerdem einen Ausgang für ein Reset-Signal Uᵣₑₛₑₜ haben, die einen power-down- oder einen power-up-Vorgang an der elektronischen Ausrüstung des Haushaltgerätes vornimmt.

Durch die Steuerlogik 14 kann - beispielsweise in Abhängigkeit von der Art oder dem Ort des Fehlerzustandes - entschieden werden, ob die Notabschaltung nur vorübergehend oder in absoluter Weise vorgenommen werden soll. Im letzteren Fall können besondere Handlungen erforderlich sein, um die Notabschaltung wieder rückgängig zu machen. Beispielsweise kann verlangt werden, dass zum Reset der Notabschaltung die Leitungen 1 und 2 völlig vom Netz getrennt werden, also beispielsweise der Netzstecker zu ziehen ist. Eine andere Möglichkeit ist die Eingabe eines Freigabesignals über den Eingang 30 der Steuerlogik 14.

Optional kann in Versorgungsrichtung vor dem Netzentstörfilter 3 eine Überwachungseinrichtung 31 für die Prüfung des Stroms und /oder der Spannung in bzw. an den Netzleitungen 1, 1', 2, 2' eingeschaltet sein. Bei Abweichungen des Stroms und/oder der Spannung von ihren zulässigen Betriebswerten wird die Überwachungseinrichtung ein Signal an ihren Ausgang 32 geben, das entweder ebenfalls in der Steuerlogik 14 im Sinne einer Abschaltmaßnahme oder in einem elektronischen Steuergerät, das hier nicht näher dargestellt ist, zu einem Warnsignal verarbeitet werden kann. Bei Wirkverbindung der Überwachungseinrichtung vor und hinter den Netztrennschaltern 11 und 12 kann sogar die ordnungsgemäße Wirkung dieser Schalter überprüft werden.

## Patentansprüche

1. Haushaltgerät, welches eine Netzanschlusseinheit mit einem Netzentstörfilter (3), an dessen Ausgangsseite die zentrale Stromversorgungseinrichtung (L'1, N'1) für die elektrische Ausrüstung des Haushaltgerätes und mindestens eines elektronischen Steuergerätes des Haushaltgerätes angeschlossen ist, umfasst, **dadurch gekennzeichnet, dass** zusammen mit dem Netzentstörfilter (3) in die oder den Phasenleiter (1,') oder zusätzlich in den Nullleiter (2, 2') eine automatisch steuerbare Netztrennvorrichtung (10) geschaltet ist, an deren Eingangsseite (L, N) eine Stromversorgungseinrichtung (15) für eine elektronische Steuerlogik (14) der Netztrennvorrichtung (10) und an deren Steuereingang (13) der Steuerausgang (25) der Steuerlogik (14) angeschlossen sind.

2. Haushaltgerät nach Anspruch 1, **dadurch gekennzeichnet, dass** die Steuerlogik (14) mindestens einen Eingang (19, 20) für Triggersignale und eine Schaltvorrichtung (13) aufweist, die das Ein- und/oder Ausschalten der Netzschalter (11, 12) der Netztrennvorrichtung bewirkt, sobald ein Triggersignal an dem Eingang (19, 20) anliegt.

3. Haushaltgerät nach Anspruch 2, **dadurch gekennzeichnet, dass** mindestens einer der Eingänge (20) einem Fehlerzustand zugeordnet ist, der beim Anliegen eines Triggersignals an diesem Eingang (20) eine Notabschaltung der Stromversorgung der elektrischen Ausrüstung zur Folge hat.

4. Haushaltgerät nach Anspruch 3, **dadurch gekennzeichnet, dass** der Fehlerzustand ein Ausgangssignal der Steuerlogik (14) bewirkt, das die Netztrennvorrichtung (10) zur Unterbrechung der Phasenleitungen (L) oder zusätzlich des Nullleiters (N) veranlasst.

5. Haushaltgerät nach einem der Ansprüche 1 bis 4, **dadurch gekennzeichnet, dass** die Steuerlogik (14) einen Ausgang für ein Signal an einen optischen oder akustischen Signalgeber (26) aufweist, der im Falle einer Notabschaltungsmaßnahme ein positives Signal empfängt.

6. Haushaltgerät nach einem der vorstehenden Ansprüche, **dadurch gekennzeichnet, dass** die Steuerlogik (14) einen Ausgang (27) für ein elektrisches Signal an das elektronische Steuergerät aufweist, das im Falle einer Notabschaltungsmaßnahme ein optisches oder akustisches Anzeigesignal erzeugt.

7. Haushaltgerät nach Anspruch 5 oder 6, **dadurch gekennzeichnet, dass** die Steuerlogik (14) nach Ausführung einer Notabschaltungsmaßnahme rücksetzbar ist.

8. Haushaltgerät nach Anspruch 7, **dadurch gekennzeichnet, dass** das Rücksetzen der Steuerlogik (14) von einer bestimmten vorgeschalteten Handlung abhängig ist.

9. Haushaltgerät nach Anspruch 8, **dadurch gekennzeichnet, dass** die bestimmte Handlung das Auslösen eines Freigabesignals ist.

10. Haushaltgerät nach Anspruch 9, **dadurch gekennzeichnet, dass** zum Auslösen des Freigabesignals eine Schalteinrichtung an der Netzanschlusseinheit vorgesehen ist.

11. Haushaltgerät nach Anspruch 8, **dadurch gekennzeichnet, dass** die bestimmte Handlung das Ziehen des Netzsteckers ist.

12. Haushaltgerät nach einem der vorstehenden Ansprüche, **dadurch gekennzeichnet, dass** die Stromversorgungseinrichtung (15) für die Steuerlogik (14) mindestens einen Ausgang (18) aufweist, der zur stand-by-Stromversorgung an mindestens eine Komponente der elektrischen Ausrüstung des Haushaltgerätes geführt ist.

13. Haushaltgerät nach Anspruch 12, **dadurch gekennzeichnet, dass** in Versorgungsrichtung hinter der Netztrennvorrichtung (10) eine allgemeine Stromversorgungseinrichtung (28) für mindestens eine Komponente der elektrischen Ausrüstung des Haushaltgerätes an die Netzleitungen (1', 2') angeschlossen ist.

14. Haushaltgerät nach Anspruch 13, **dadurch gekennzeichnet, dass** die allgemeine Stromversorgungseinrichtung (28) einen Ausgang (Uᵣₑₛₑₜ) hat, der ein power-down-Signal und/oder ein power-up-Signal für ein elektronisches Steuergerät ausgeben kann.

15. Haushaltgerät nach einem der vorstehenden Ansprüche, **dadurch gekennzeichnet, dass** in Versorgungsrichtung vor dem Netzentstörfllter (3) eine Überwachungseinrichtung (31) mit den Netzleitungen (1, 2, 1', 2') wirkverbunden ist, die den Strom in den Netzleitungen (1, 2, 1', 2') und/oder die Spannung an den Netzleitungen (1, 2, 1', 2') auf Einhaltung ihrer betriebsmäßigen Werte prüft und bei Abweichungen ein Signal an ihren Ausgang (32) gibt.

## Claims

1. Domestic appliance which comprises a supply connection unit with an interference suppression filter (3), to the output side of which the central power supply device (L'1, N'1) for the electrical equipment of the domestic appliance and at least one electronic control device of the domestic appliance is connected, **characterised in that** together with the interference suppression filter (3) an automatically controllable network disconnection device (10) is connected into the phase conductor or phase conductors (1, 1'), or in addition into the neutral conductor (2, 2'), a power supply device (15) for an electronic control logic circuit (14) of the network disconnection device (10) being connected to the input side (L, N) of said network disconnection device (10) and the control output (25) of the control logic circuit (14) being connected to the control input (13) of said network disconnection device (10).

2. Domestic appliance according to claim 1, **characterised in that** the control logic circuit (14) has at least one input (19, 20) for trigger signals and a switching device (13) which effects the switching on and/or switching off of the network switches (11, 12) of the network disconnection device as soon as a trigger signal is present at the input (19, 20).

3. Domestic appliance according to claim 2, **characterised in that** at least one of the inputs (20) is assigned to an error status, which when a trigger signal is present at said input (20) results in an emergency shutdown of the power supply for the electrical equipment.

4. Domestic appliance according to claim 3, **characterised in that** the error status effects an output signal of the control logic circuit (14) which causes the network disconnection device (10) to interrupt the phasing lines (L) or in addition the neutral conductor (N).

5. Domestic appliance according to one of claims 1 to 4, **characterised in that** the control logic circuit (14) has an output for a signal to a visual or acoustic signal transmitter (26) which receives a positive signal in the event of an emergency shutdown action.

6. Domestic appliance according to one of the preceding claims, **characterised in that** the control logic circuit (14) has an output (27) for an electrical signal to the electronic control device, which receives a visual or acoustic display signal in the event of an emergency shutdown action.

7. Domestic appliance according to claim 5 or 6, **characterised in that** the control logic circuit (14) can be reset after execution of an emergency shutdown action.

8. Domestic appliance according to claim 7, **characterised in that** the resetting of the control logic circuit (14) is a function of a particular upstream action.

9. Domestic appliance according to claim 8, **characterised in that** the particular action is the triggering of a release signal.

10. Domestic appliance according to claim 9, **characterised in that** to trigger the release signal a switching device is provided on the supply connection unit.

11. Domestic appliance according to claim 8, **characterised in that** the particular action is the unplugging of the mains plug.

12. Domestic appliance according to one of the preceding claims, **characterised in that** the power supply device (15) for the control logic circuit (14) has at least one output (18) which is operated for the standby power supply to at least one component of the electrical equipment of the domestic appliance.

13. Domestic appliance according to claim 12, **characterised in that** in the supply direction downstream of the network disconnection device (10) a general power supply device (28) for at least one component of the electrical equipment of the domestic appliance is connected to the power lines (1', 2').

14. Domestic appliance according to claim 13, **characterised in that** the general power supply device (28) has an output (Uᵣₑₛₑₜ) which can output a power-down signal and/or a power-up signal for an electronic control device.

15. Domestic appliance according to one of the preceding claims, **characterised in that** in the supply direction upstream of the interference suppression filter (3) a monitoring device (31) is operatively connected to the power lines (1, 2, 1', 2') and checks the power in the power lines (1, 2, 1', 2') and/or the voltage on the power lines (1, 2, 1', 2') for compliance with their operational values and in the event of deviations sends a signal to its output (32).

## Revendications

1. Appareil ménager lequel comprend une unité de raccordement au réseau munie d'un filtre antiparasite de réseau (3) sur le côté de sortie duquel sont raccordés le dispositif central d'alimentation en courant (L'1, N'1) pour l'équipement électrique de l'appareil ménager et au moins un appareil de commande électronique de l'appareil ménager, **caractérisé en ce qu'**un dispositif de coupure de réseau (10) commandable automatiquement est commuté, en conjonction avec le filtre antiparasite de réseau (3), dans le ou les conducteurs de phase (1, 1') ou en plus dans le conducteur neutre (2, 2'), sur le côté d'entrée (L, N) duquel dispositif de coupure de réseau est raccordé un dispositif d'alimentation en courant (15) pour une logique de commande électronique (14) du dispositif de coupure de réseau (10) et sur l'entrée de commande (13) duquel est raccordée la sortie de commande (25) de la logique de commande (14).

2. Appareil ménager selon la revendication 1, **caractérisé en ce que** la logique de commande (14) présente au moins une entrée (19, 20) pour des signaux de déclenchement et un dispositif de commutation (13), lequel a pour effet la mise sous tension et/ou hors tension des interrupteurs de réseau (11, 12) du dispositif de coupure du réseau dès qu'un signal de déclenchement est présent sur l'entrée (19, 20).

3. Appareil ménager selon la revendication 2, **caractérisé en ce qu'**un état d'erreur est attribué à au moins l'une des entrées (20), lequel, lorsqu'un signal de déclenchement est présent sur cette entrée (20), a pour conséquence un arrêt d'urgence de l'alimentation en courant de l'équipement électrique.

4. Appareil ménager selon la revendication 3, **caractérisé en ce que** l'état d'erreur provoque un signal de sortie de la logique de commande (14), qui incite le dispositif de coupure de réseau (10) à interrompre les lignes de phase (L) ou en plus le conducteur neutre (N).

5. Appareil ménager selon l'une quelconque des revendications 1 à 4, **caractérisé en ce que** la logique de commande (14) présente une sortie pour un signal à un générateur de signaux (26) optiques ou acoustiques, qui, en cas d'une mesure d'arrêt d'urgence, reçoit un signal positif.

6. Appareil ménager selon l'une quelconque des revendications précédentes, **caractérisé en ce que** la logique de commande (14) présente une sortie (27) pour un signal électrique à l'appareil de commande électronique, qui, en cas d'une mesure d'arrêt d'urgence, génère un signal d'indication optique ou acoustique.

7. Appareil ménager selon la revendication 5 ou 6, **caractérisé en ce que** la logique de commande (14) peut être remise à zéro après la réalisation d'une mesure d'arrêt d'urgence.

8. Appareil ménager selon la revendication 7, **caractérisé en ce que** la remise à zéro de la logique de commande (14) dépend d'une action préalable déterminée.

9. Appareil ménager selon la revendication 8, **caractérisé en ce que** l'action déterminée est le déclenchement d'un signal de libération.

10. Appareil ménager selon la revendication 9, **caractérisé en ce que** pour déclencher le signal de libération, un dispositif de commutation est ménagé sur l'unité de raccordement au réseau.

11. Appareil ménager selon la revendication 8, **caractérisé en ce que** l'action déterminée est le retrait de la fiche de contact.

12. Appareil ménager selon l'une quelconque des revendications précédentes, **caractérisé en ce que** le dispositif d'alimentation en courant (15) présente au moins une sortie (18) pour la logique de commande (14), laquelle sortie, pour l'alimentation en courant en mode de veille, est menée sur au moins un composant de l'équipement électrique de l'appareil ménager.

13. Appareil ménager selon la revendication 12, **caractérisé en ce que**, en direction d'alimentation en aval du dispositif de coupure de réseau (10), un dispositif d'alimentation en courant général (28) est raccordé aux lignes du réseau (1', 2') pour au moins un composant de l'équipement électrique de l'appareil ménager.

14. Appareil ménager selon la revendication 13, **caractérisé en ce que** le dispositif d'alimentation en courant général (28) a une sortie (Uᵣₑₛₑₜ) qui peut sortir un signal power down et/ou un signal power up pour un appareil de commande électronique.

15. Appareil ménager selon l'une quelconque des revendications précédentes, **caractérisé en ce que**, en direction en amont du filtre antiparasite de réseau (3), un dispositif de surveillance (31) est raccordé de manière interactive aux lignes de réseau (1, 2, 1', 2'), lequel vérifie que les valeurs de service du courant dans les lignes de réseau (1, 2, 1', 2') et/ou de la tension sur les lignes de réseau (1, 2, 1', 2') sont respectées et donne un signal à leur sortie (32) en cas d'écarts.
